Europäisches Patentamt

European Patent Office

Office européen des brevets

(19)

(11)     EP 1 096 706 A1

(12)     DEMANDE DE BREVET EUROPEEN

(43) Date de publication:
     02.05.2001   Bulletin 2001/18

(51) Int Cl.⁷: H04B 10/12, H04J 14/02

(21) Numéro de dépôt: 00402965.8

(22) Date de dépôt: 25.10.2000

(84) Etats contractants désignés:
     AT BE CH CY DE DK ES FI FR GB GR IE IT LI LU
     MC NL PT SE
     Etats d'extension désignés:
     AL LT LV MK RO SI

(30) Priorité: 25.10.1999  FR 9913262

(71) Demandeur: ALCATEL
     75008 Paris (FR)

(72) Inventeurs:
     • Noirie, Ludovic
       92220 Bagneux (FR)

     • Bisson, Arnaud, Ilot des Cours - Bât. C
       91400 Orsay (FR)
     • Bruyere, Franck
       75014 Paris (FR)
     • Beylat, Jean-Luc
       92160 Antony (FR)

(74) Mandataire: Lamoureux, Bernard et al
     COMPAGNIE FINANCIERE ALCATEL
     Dépt. Propriété industrielle
     30, avenue Kléber
     75116 Paris (FR)

(54)     **Système de transmission optique a signaux de charge SDH ou FEC, avec une surmodulation de sous porteuse optimisee**

(57)     L'invention concerne un système de transmission optique, dans lequel les signaux de charge sont transmis sous forme de signaux à hiérarchie numérique synchrone (SDH) ou à code correcteur d'erreurs (FEC : « Foward Error Correction » en anglais). Le système de transmission présente une voie de transmission, typiquement une voie de supervision, à un débit inférieur à celui du signal de charge; cette voie est transmise par surmodulation d'une sous porteuse. La fréquence de la sous porteuse est choisie de sorte à limiter les erreurs de démodulation de la sous porteuse du fait des harmoniques du signal de charge.

FIG_3

**EP 1 096 706 A1**

**Description**

La présente invention concerne le domaine des transmissions optiques, et plus particulièrement les systèmes de transmissions utilisant une sous porteuse en surmodulation pour la transmission d'informations de fonctionnement, d'administration et de maintenance (OAM). De telles informations doivent être transmises entre les noeuds d'un système de transmission, avec un débit relativement faible, qui est par exemple de 10 kbit/s.

Fred Heismann et autres, Signal tracking and performance monitoring in multi-wavelength optical networks, WeB 2.2, ECOC'96p. 3.47-3.50 décrit l'usage d'une surmodulation par sous porteuse dans les réseaux optiques. Ce document propose d'associer à chaque porteuse optique d'un réseau de transmissions optiques un signal d'identification à faible fréquence, en modulant chaque porteuse en amplitude par un signal de fréquence comprise entre 10 kHz et 1 MHz. Une information numérique est modulée sur le signal de faible fréquence, par exemple par modulation à décalage de fréquence ou FSK ; cette modulation de la sous porteuse peut contenir l'information de routage optique pour la porteuse, et par exemple son origine, sa destination et le chemin qu'elle doit emprunter.

M. Murikami et autres, A remote supervisory system based on subcarrier overmodulation for submarine optical amplifier systems, Journal of Lightwave Technology, vol. 14 no. 3, mai 1996, p. 671-677 étudie les performances physiques de la surmodulation par sous-porteuse, en fonction notamment de la fréquence de la sous porteuse et de l'indice de modulation de la sous porteuse.

Y. Hamazumi et autre, Transmission capacity of optical path overhead transfer scheme using pilot tone for optical path network, Journal of Lightwave Technology, vol. 15 no. 12, décembre 1997, p. 2196-2205 étudie les performances d'une solution de transmission des informations de maintenance par surmodulation d'une sous porteuse, en comparaison des solutions alternatives telle que l'utilisation d'un canal particulier d'un multiplex en longueur d'onde.

Dans un système de transmission utilisant la surmodulation par une sous porteuse pour transmettre les informations de maintenance, la fréquence de la sous porteuse est choisie de sorte à éviter les interférences avec les fréquences utilisées pour les longueurs d'onde du signal.

L'invention repose sur la constatation que les simulations de transmission, généralement effectuées à partir de séquences de bit pseudo-aléatoires (PRBS), comme par exemple dans l'article de F. Heismann précité, ne sont pas représentatives de l'ensemble des signaux possibles, notamment du fait du codage, et que les techniques de choix de la sous porteuse proposées dans l'art antérieur ne sont pas satisfaisantes pour tous les types de signaux et de codages. L'invention apporte une solution à ce problème nouveau.

On connaît par ailleurs le codage SDH (acronyme de l'anglais Synchronous Digital Hierarchy, signal à hiérarchie numérique synchrone) ; ce codage est défini dans la recommandation ITU-T G.707. On connaît aussi les technique de correction d'erreurs du type FEC (acronyme de l'anglais Forward Error Correction), qui sont définies par exemple dans la recommandation ITU-T G.975.

Plus précisément, l'invention propose un système de transmission optique, dans lequel les signaux de charge sont transmis sous forme de signaux à hiérarchie numérique synchrone (SDH), et présentant une voie à un débit inférieur à celui du signal de charge transmise par surmodulation d'une sous porteuse à un débit inférieur à celui du signal de charge, la fréquence de la sous porteuse étant choisie de sorte à limiter les erreurs de démodulation de la sous porteuse du fait des harmoniques du signal de charge.

De préférence, le nombre des erreurs sur la dite voie en présence des harmoniques du signal de charge est inférieur à dix fois le nombre des erreurs en l'absence de ces harmoniques.

On peut avantageusement choisir la fréquence de la sous porteuse dans l'ensemble de fréquence suivant :

$$[0,+\infty] - \bigcup_{k=1}^{\infty} \left[ k.f_{SDH} - \Delta f, k.f_{SDH} + \Delta f \right]$$

avec k un entier et $f_{SDH}$ = 155520/127/8 kHz.

Dans cette formule, $\Delta f$ présente une valeur de 8kHz, ou une valeur supérieure ou égale à la moitié du débit binaire de la dite voie.

L'invention propose aussi un système de transmission optique, dans lequel les signaux de charge sont transmis sous forme de signaux à code correcteur d'erreurs (FEC), et présentant une voie à un débit inférieur à celui du signal de charge transmise par surmodulation d'une sous porteuse, la fréquence de la sous porteuse étant choisie de sorte à limiter les erreurs de démodulation de la sous porteuse du fait des harmoniques du signal de charge.

De préférence, le nombre des erreurs sur la dite voie en présence des harmoniques du signal de charge est inférieur à dix fois le nombre des erreurs en l'absence de ces harmoniques.

Dans un tel système, la fréquence de la sous porteuse est avantageusement choisie dans l'ensemble de fréquence suivant :

2

$$[0,+\infty] - \bigcup_{m=1}^{\infty}\left[m.f'_{FEC} - \Delta f, m.f'_{FEC} + \Delta f\right]$$

avec m un entier, et $f'_{FEC}$ = (1/238)* 155520/8 kHz.

Dans cette formule, $\Delta f$ présente une valeur de 8kHz, ou une valeur supérieure ou égale à la moitié du débit binaire de la dite voie.

Dans les deux cas, la voie de transmission à un débit inférieur peut être utilisée pour transporter des informations d'administration et de maintenance. On peut aussi combiner les deux formules, c'est-à-dire choisir la fréquence de sous porteuse dans l'intersection des deux ensembles de fréquence précités.

D'autres caractéristiques et avantages de l'invention apparaîtront à la lecture de la description qui suit de modes de réalisation de l'invention, donnée à titre d'exemple et en référence aux dessins annexés, qui montrent

- figure 1, un graphe du spectre d'un signal SDH ;
- figure 2, un graphe du spectre d'un signal SDH, avec une surmodulation en sous porteuse ;
- figure 3, une représentation schématique des spectres possibles selon l'invention.

L'invention repose sur la constatation que la simulation des signaux transmis par des séquences de bits pseudo-aléatoires - comme par exemple des séquences du type PRBS en $2^n$-1, avec n un entier - ne prend pas en compte les codages, et que dans certaines circonstances, un codage peut générer des harmoniques gênantes dans la voie transmise par surmodulation d'une sous porteuse.

Il est alors possible que certaines raies du spectre des signaux transmis ou signaux de charge recouvrent totalement ou partiellement la bande de fréquence choisie pour la surmodulation par sous porteuse. Une telle situation dégrade considérablement la transmission des informations en surmodulation de sous porteuse. On appelle indifféremment dans la suite voie de transmission ou voie de supervision la voie à débit plus faible transmise par surmodulation de sous porteuse.

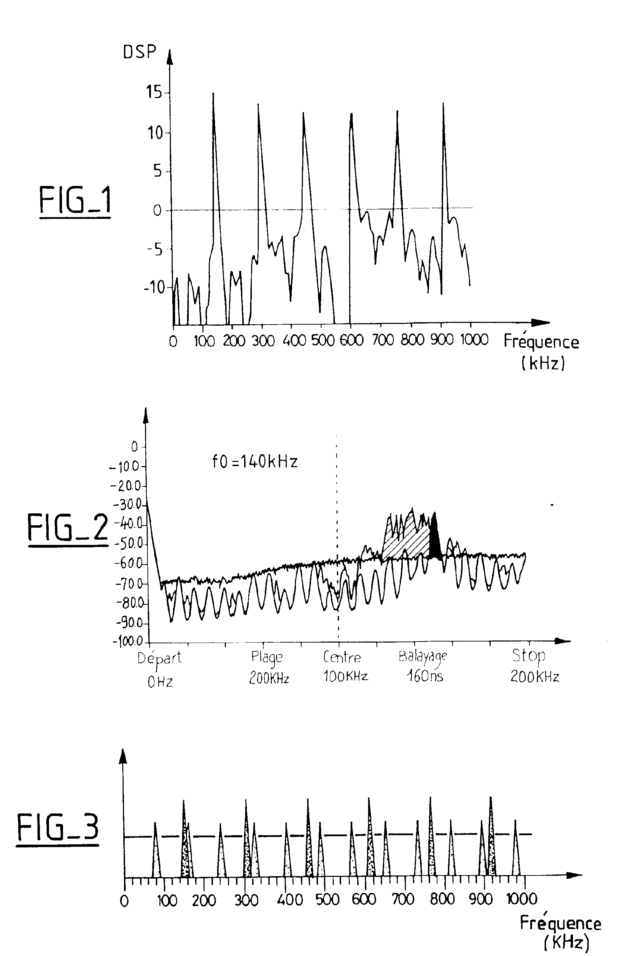

La figure 1 montre un graphe du spectre d'un signal SDH. Comme expliqué dans la recommandation précitée, un signal SDH comprend une pluralité de modules de transport synchrone ou STM (acronyme de l'anglais Synchronous Transport Modules) ; ces modules sont habituellement indicés par un nombre croissant avec la fréquence.

Les signaux SDH sont formés de trames successives comme défini dans la norme ITU-T G.707. La trame a une durée fixe de 125 microsecondes, correspondant à une fréquence de 8 kHz, quel que soit le débit transporté. La trame de base est le STM-1 (module de transport asynchrone de niveau 1), qui comprend 9 lignes de 270 colonnes d'octets, ce qui représente 270*9*8=19440 bits, soit un débit de 155,520 Mbit/s. En première approche, les trames STM-N (module de transport asynchrone de niveau N) de débit supérieur peuvent être considérées comme étant composées de l'entrelacement (au niveau de l'octet) de N trames STM-1 et comportent donc N*19440 bits transmis au débit N*155,520 Mbit/s. La norme définit les trames pour N=1, N=4, N=16 et N=64. Chaque STM-1 entrelacé dans le STM-N sont chargés de bits d'information indépendamment les uns des autres. Les bits d'informations transportés par la trame STM-N sont embrouillés par une séquence pseudo-aléatoire de 127 bits.

Sur la figure 1 est portée en abscisse la fréquence en kHz, entre 0 et 1 MHz, et en ordonnée la densité spectrale de puissance. Apparaît en traits pointillés sur la figure le spectre d'un signal SDH avec un STM16 à 2,48832 Gbit/s, avec 16 STM1 qui sont tous utilisés. On note l'absence de raies spectrales dans la plage de fréquence en dessous de 1 MHz, ce qui correspond à l'enseignement de l'art antérieur, dans lequel une séquence pseudo-aléatoire du type PBRS n'induit pas de raies spectrales dans la plage de fréquence dans laquelle on peut choisir la sous porteuse.

La figure montre encore en traits pleins le spectre d'un signal SDH dans lequel seul l'un des STM1 est utilisé ; le graphe fait apparaître des raies spectrales à une fréquence multiple de 152 kHz, comme expliqué plus en détail dans la suite. Il apparaît clairement sur la figure 1 que l'utilisation d'un codage SDH, dans certaines conditions de charge, peut générer des raies gênantes pour la transmission des signaux de fonctionnement, d'administration et de maintenance. Ces raies gênantes sont en fait provoquées par l'embrouillement des bits d'informations transportés par la trame STM-N.

La figure 2 montre un graphe du spectre d'un signal SDH, avec une surmodulation en sous porteuse. Est portée en abscisse la fréquence en kHz entre 0 et 200 kHz. En ordonnée apparaît la puissance du signal en dBm. Le signal SDH est un signal dans lequel seul l'un des modules de transport synchrone est utilisé, du genre qui produit le spectre en traits pleins de la figure . On a en outre représenté à la figure 2 une surmodulation par une sous porteuse à la fréquence de 140 kHz. Cette sous porteuse est modulée en fréquence, avec un débit de 24 kbit/s, et une profondeur de modulation de 10 %.

La figure montre bien d'une part la zone hachurée correspondant à la sous porteuse, et d'autre part en noir la raie à 152 kHz générée par le codage SDH.

L'invention propose une solution à ce problème des raies possibles générées par le codage. Elle propose des choix possibles de la fréquence de la sous porteuse, de sorte à éviter ou limiter les erreurs provoquées par le signal de charge sur le signal d'administration et de maintenance. L'invention s'applique quelque soit la valeur du débit maximal choisie au delà de 155 Mbit/s, qui est le débit minimal proposé dans la recommandation précitée. Elle propose de choisir la fréquence de la sous porteuse de sorte à ce que le nombre d'erreur sur la voie de supervision en présence des harmoniques du signal de charge soit inférieur à 10 fois le nombre d'erreur sur cette voie en l'absence des harmoniques du signal de charge. Un nombre d'erreurs multiplié par 10 correspond à une pénalité de 0,6 dB seulement sur le rapport porteuse-à-bruit de la surmodulation. Généralement, les marges à prendre dans le système de surmodulation doivent pouvoir supporter une pénalité de quelques dB (1 à 2 dB en pratique), qui prennent en compte l'ensemble des causes d'erreurs.

Les erreurs sur la voie de supervision peuvent être mesurées facilement en évaluant le taux d'erreur en l'absence de tout signal de charge, puis en évaluant le taux d'erreur en présence du signal de charge. La mesure du taux d'erreur est en soi une opération bien connue de l'homme du métier.

Dans le cas d'un codage du type SDH, les fréquences qui peuvent poser problème sont, pour tout module de transport synchrone, les harmoniques de 8 kHz qui sont proches du produit d'une fréquence $f_{SDH}$ par un entier k, avec $f_{SDH} = 155520/127/8 \approx 153$ kHz. Ces harmoniques k. $f_{SDH}$ sont provoquées par l'interaction entre le brouillage PRBS en $2^7$-1, le multiplexage des modules de transport synchrones, et les trames du signal SDH. Pour des valeurs de k = 1, il convient d'éviter les harmoniques de 8 kHz à 152 et 160 kHz. Pour k = 2, des valeurs de 304 et 312 kHz sont pénalisantes.

Ainsi, pour que le nombre d'erreurs en présence des harmoniques du signal de charge soit inférieur à 10 fois le nombre d'erreurs en l'absence des ces harmoniques, on choisit de préférence une valeur de fréquence de sous porteuse dans une bande utilise formée de

$$[0,+\infty] - \bigcup_{k=1}^{\infty} \left[ k.f_{SDH} - \Delta f, k.f_{SDH} + \Delta f \right] \qquad (1)$$

Cette équation correspond en fait à toute la bande de fréquence, à laquelle on enlève des segments de largeur $2.\Delta f$ autour des valeurs $k.f_{SDH}$ mentionnés plus haut. Le choix de $\Delta f$ peut s'effectuer comme expliqué plus haut, de telle sorte à limiter les erreurs additionnelles provoquées par les harmoniques du signal de charge. On peut à titre d'exemple prendre une valeur de $\Delta f$ de 8 kHz ce qui permet d'exclure automatiquement les raies multiples de 8 kHz du signal SDH voisines de $k*f_{SDH}$. Dans l'exemple donné plus haut, on arrive ainsi à exclure les raies à 152 et 160 kHz pour k=1.

Plus généralement, le choix d'une valeur de $\Delta f$ fait intervenir la largeur spectrale de la surmodulation - qui est liée au débit binaire de la surmodulation et au type de modulation utilisé - ainsi que la réjection du filtre utilisé. Af est de préférence supérieur ou égal à la moitié du débit transporté, notamment pour les modulations simples de type MDP-2 par exemple; le choix de $\Delta f$ dépend aussi de la réjection du filtre utilisé en réception aux fréquences $f_0 \pm \Delta f$, $f_0$ étant la fréquence de la surmodulation.

On peut estimer comme suit la réjection nécessaire du filtre, selon le résultat recherché. Par exemple, pour multiplier par 2 le nombre d'erreurs sur la surmodulation et obtenir un taux d'erreur final de l'ordre de $4.10^{-8}$, il faut dans le pire des cas - i.e. dans la configuration de chargement du STM-N engendrant le plus d'harmoniques - que le filtre électrique à la réception de la surmodulation efface l'harmonique du signal de charge de 34 dB, c'est-à-dire présente une réjection à $f_0 \pm \Delta f$ supérieure ou égale à 34 dB. Si l'on prend comme critère erreurs «x10» au lieu de « x 2 », l'effacement nécessaire n'est plus que de 27 dB environ.

Plus généralement, le choix de la fréquence de la sous porteuse dépend de la nature de la modulation, c'est-à-dire de la largeur de bande du spectre de la sous porteur modulée ; ce choix dépend aussi de la qualité du filtre de réception utilisé pour récupérer la sous porteuse avant sa démodulation. En fonction de ces paramètres, et des erreurs acceptables dans un système de transmission donné, l'homme du métier peut choisir une valeur appropriée de la fréquence de la sous porteuse. Comme expliqué plus haut, une multiplication par dix du nombre d'erreurs provoqué par les harmoniques du signal semble satisfaisante.

L'invention s'applique pour un signal SDH à haut débit, c'est-à-dire pour tout signal d'un débit supérieur à 155,52 Mbit/s, et par exemple un signal à 2,44832 Gbit/s, ou à 9,95328 Gbit/s. D'autres débits sont possibles.

L'invention propose en outre de choisir la fréquence du signal de sous porteuse de sorte à limiter les erreurs provoquées par les harmoniques, dans le cas d'un signal de charge à correction d'erreur, du type FEC défini par exemple dans la recommandation ITU-T G.975. Comme dans le cas de signal de charge SDH, l'invention repose sur la constatation que ce type de signaux peut générer des harmoniques génantes pour la surmodulation de sous porteuse.

Les signaux « FEC » sont formés de trames successives comme défini dans la norme ITU-T G.975. La trame est organisé en m séquences de 255 octets entrelacées entre elles, m étant le facteur de multiplexage/démultiplexage FEC. Le premier octet de chaque séquence sert entre autres choses à la délimitation de la trame, les 238 octets suivants de chaque séquence correspondent aux bits d'information à transporter, et les 16 derniers sont des octets de redondance utilisés pour la correction. Les m fois 238 octets de bits d'informations de la trame FEC proviennent de signaux SDH, qui sont formés par des STM-N. Dans la norme G.975 ne sont considérés que les cas N=16 et au-delà. Le débit du signal FEC est donc celui du STM-N multiplié par 255/238 ≈ 1,07.

L'invention propose une solution au problème des raies possibles générées par le codage correcteur d'erreur. Elle propose des choix possibles de la fréquence de la sous porteuse, de sorte à éviter ou limiter les erreurs provoquées par le signal de charge sur le signal transmis par surmodulation de sous porteuse, typiquement un signal d'administration et de maintenance transmis sur la voie de supervision. Comme dans le cas du signal de charge SDH, l'invention s'applique quelque soit la valeur du débit maximal choisie au delà de 155 Mbit/s. Elle propose encore de choisir la fréquence de la sous porteuse de sorte que le nombre d'erreurs sur la voie de supervision en présence des harmoniques du signal de charge soit inférieur à dix fois le nombre d'erreurs en présence des harmoniques du signal de charge. Ces erreurs peuvent être mesurées comme expliqué plus haut.

Dans le cas d'un codage du type FEC, les fréquences qui peuvent notamment poser problème sont les fréquences produit d'une fréquence $f_{FEC}$ par un entier k, avec $f_{FEC} = (1/238)*(N/n)*155520/8$. Ces harmoniques k. $f_{FEC}$ sont provoquées par le tramage du signal FEC ; N et n sont les valeurs définies dans la recommandation, et expliquées plus haut. Dans la recommandation, N a une valeur de 16 et n =N, de telle sorte que $f_{FEC} \approx 81,7$ khZ.

Plus généralement, n est en principe un sous multiple quelconque de N, et on peut donc considérer $f'_{FEC} = (1/238)*155520/8 \approx 81,7$ khZ. Les harmoniques du signal de charge sont alors de la forme $h.f'_{FEC}$, avec $h = m.z$, m étant un entier quelconque et $z = N/n$ étant un entier fixé par le système FEC. On notera que dans ce cas, il suffit d'éviter les multiples de $f'_{FEC}$ (c'est-à-dire faire comme si z=1), ce qui est toutefois sous-optimal si n est différent de N.

Ainsi, pour que le nombre d'erreurs en présence des harmoniques du signal de charge soit inférieur à 10 fois le nombre d'erreurs en l'absence des ces harmoniques, on choisit de préférence une valeur de fréquence de sous porteuse dans une bande utilise formée de

$$[0,+\infty] - \bigcup_{m=1}^{\infty}\left[m.f'_{FEC} - \Delta f, m.f'_{FEC} + \Delta f\right] \qquad (2)$$

Comme dans le cas précédent, cette équation correspond en fait à toute la bande de fréquence, à laquelle on enlève des segments de largeur $2.\Delta f$ autour des valeurs $k.f'_{FEC}$ mentionnées plus haut. Le choix de $\Delta f$ peut s'effectuer comme expliqué plus haut, de telle sorte à limiter les erreurs additionnelles provoquées par les harmoniques du signal de charge. On peut à titre d'exemple prendre une valeur de $\Delta f$ de 8 kHz,

Plus généralement, et de la même façon que pour un signal SDH, le choix de la fréquence de la sous porteuse dépend de la nature de la modulation, c'est-à-dire de la largeur de bande du spectre de la sous porteur modulée ; ce choix dépend aussi de la qualité du filtre de réception utilisé pour récupérer la sous porteuse avant sa démodulation. En fonction de ces paramètres, et des erreurs acceptables dans un système de transmission donné, l'homme du métier peut choisir une valeur appropriée de la fréquence de la sous porteuse. Comme expliqué plus haut une mulitplication par dix du nombre d'erreurs provoqué par les harmoniques du signal semble un résultat satisfaisant.

L'invention s'applique pour un signal FEC à haut débit, c'est-à-dire pour tout signal d'un débit supérieur à 166,62 Mbit/s, et par exemple un signal à 2,666 Gbit/s, ou à 10,664 Gbit/s. D'autres débits sont possibles.

La figure 3 montre une représentation schématique des spectres possibles selon l'invention ; en abscisse sont portées les fréquences, et en ordonnées les puissances. On a porté à la figure 3 les harmoniques des signaux SDH et FEC - par convention, les harmoniques des signaux SDH sont d'une taille plus importantes. Le trait gras montre les plages possibles de fréquence pour la sous porteuse. La figure correspond au cas où l'on choisit la fréquence de la sous porteuse de sorte à éviter toute influence du signal de charge, qu'il soit codé SDH ou FEC.

Dans les modes de réalisation qui précèdent, on a considéré un rapport de 10 entre le nombre d'erreurs en présence des harmoniques, et le nombre d'erreurs en l'absence de ces harmoniques. On pourrait aussi considérer, pour des performances encore meilleures, un rapport de 2. Ce rapport correspondrait à une pénalité de 0,2 dB seulement sur le rapport porteuse-à-bruit de la surmodulation.

Bien entendu, la présente invention n'est pas limitée aux exemples et modes de réalisation décrits et représentés, mais elle est susceptible de nombreuses variantes accessibles à l'homme de l'art. Il est notamment clair que les valeurs de plages de fréquences peuvent être adaptées en fonction du débit nécessaire pour la modulation de la sous porteuse, et suivant la qualité requise sur la voie de transmission correspondante. L'invention s'applique tout particulièrement à la transmission d'information d'administration et de maintenance, mais d'autres applications sont possibles.

**Revendications**

1. Un système de transmission optique, dans lequel les signaux de charge sont transmis sous forme de signaux à hiérarchie numérique synchrone (SDH), et présentant une voie à un débit inférieur à celui du signal de charge transmise par surmodulation d'une sous porteuse à un débit inférieur à celui du signal de charge, la fréquence de la sous porteuse étant choisie de sorte à limiter les erreurs de démodulation de la sous porteuse du fait des harmoniques du signal de charge.

2. Le système selon la revendication 1, caractérisé en ce que le nombre des erreurs sur la dite voie en présence des harmoniques du signal de charge est inférieur à dix fois le nombre des erreurs en l'absence de ces harmoniques.

3. Le système selon la revendication 1 ou 2, caractérisé en ce que la fréquence de la sous porteuse est choisie dans l'ensemble de fréquence suivant :

$$[0,+\infty]-\bigcup_{k=1}^{\infty}\left[k.f_{SDH}-\Delta f, k.f_{SDH}+\Delta f\right]$$

avec k un entier et $f_{SDH}$ = 155520/127/8 kHz.

4. Le système selon la revendication 3, caractérisé en ce que $\Delta f$ présente une valeur de 8kHz.

5. Le système selon la revendication 3 ou 4, caractérisé en ce que $\Delta f$ est supérieure ou égale à la moitié du débit binaire de la dite voie.

6. Un système de transmission optique, dans lequel les signaux de charge sont transmis sous forme de signaux à code correcteur d'erreurs (FEC), et présentant une voie à un débit inférieur à celui du signal de charge transmise par surmodulation d'une sous porteuse, la fréquence de la sous porteuse étant choisie de sorte à limiter les erreurs de démodulation de la sous porteuse du fait des harmoniques du signal de charge.

7. Le système selon la revendication 5, caractérisé en ce que le nombre des erreurs sur la dite voie en présence des harmoniques du signal de charge est inférieur à dix fois le nombre des erreurs en l'absence de ces harmoniques.

8. Le système selon la revendication 5 ou 6, caractérisé en ce que la fréquence de la sous porteuse est choisie dans l'ensemble de fréquence suivant :

$$[0,+\infty]-\bigcup_{m=1}^{\infty}\left[m.f'_{FEC}-\Delta f, m.f'_{FEC}+\Delta f\right]$$

avec m un entier, et $f'_{FEC}$ = (1/238)* 155520/8 kHz.

9. Le système selon la revendication 7, caractérisé en ce que $\Delta f$ présente une valeur de 8kHz.

10. Le système selon la revendication 8 ou 9, caractérisé en ce que $\Delta f$ est supérieure ou égale à la moitié du débit binaire de la dite voie.

11. Le système selon l'une des revendications précédentes, caractérisé en ce que la voie de transmission à un débit inférieur transporte des informations d'administration et de maintenance.

FIG_1

DSP

Fréquence
(kHz)

FIG_2

f0 = 140kHz

| Départ | Plage | Centre | Balayage | Stop |
| 0Hz | 200KHz | 100KHz | 160ns | 200KHz |

FIG_3

Fréquence
(KHz)

EP 1 096 706 A1

Office européen des brevets

**RAPPORT DE RECHERCHE EUROPEENNE**

Numéro de la demande

EP 00 40 2965

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | KLOCH A ET AL: "Pilot tones in networks with nonlinear elements" IEEE PHOTONICS TECHNOLOGY LETTERS, MARCH 1998, IEEE, USA, vol. 10, no. 3, – 3 mars 1998 (1998-03-03) pages 448-450, XP002142369 ISSN: 1041-1135 * page 448, colonne de gauche, alinéa 1 – page 449, colonne de droite, alinéa 1; figures 1,2,4 * | 1-11 | H04J14/02 |
| X | WAY W I ET AL: "A SELF-ROUTING WDM HIGH-CAPACITY SONET RING NETWORK" IEEE PHOTONICS TECHNOLOGY LETTERS,US,IEEE INC. NEW YORK, vol. 4, no. 4, 1 avril 1992 (1992-04-01), pages 402-405, XP000272625 ISSN: 1041-1135 * page 402, colonne de gauche, alinéa 1 * * page 403, colonne de gauche, alinéa 3 – page 404, colonne de gauche, alinéa 1; figures 2-4 * | 1-3,5-8, 10,11 | |
| X | DE 195 34 157 C (SIEMENS AG) 23 janvier 1997 (1997-01-23) * colonne 1, ligne 3 – ligne 12 * * colonne 2, ligne 8 – ligne 37 * * colonne 3, ligne 19 – ligne 33 * -/-- | 1,3,6,8, 11 | DOMAINES TECHNIQUES RECHERCHES (Int.Cl.7) H04J H04B |

Le présent rapport a été établi pour toutes les revendications

| Lieu de la recherche | Date d'achèvement de la recherche | Examinateur |
|---|---|---|
| LA HAYE | 29 janvier 2001 | Roldán Andrade, J |

8

**Office européen des brevets**

**RAPPORT DE RECHERCHE EUROPEENNE**

Numéro de la demande

EP 00 40 2965

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A,D | HEISMANN F ET AL: "Signal tracking and performance monitoring in multi-wavelength optical networks" ECOC '96. 22ND EUROPEAN CONFERENCE ON OPTICAL COMMUNICATION (IEEE CAT. NO.96TH8217), PROCEEDINGS OF EUROPEAN CONFERENCE ON OPTICAL COMMUNICATION, OSLO, NORWAY, 15-19 SEPT. 1996, - 19 septembre 1996 (1996-09-19) pages 47-50 vol.3, XP000923426 1996, Kjeller, Norway, Telenor, Norway ISBN: 82-423-0418-1 * page 47, alinéa 2 - page 49, alinéa 1; figures 1,2 * | 1-11 | |
| A,D | HAMAZUMI Y ET AL: "TRANSMISSION CAPACITY OF OPTICAL PATH OVERHEAD TRANSFER SCHEME USING PILOT TONE FOR OPTICAL PATH NETWORK" JOURNAL OF LIGHTWAVE TECHNOLOGY,US,IEEE. NEW YORK, vol. 15, no. 12, 1 décembre 1997 (1997-12-01), pages 2197-2205, XP000727507 ISSN: 0733-8724 * page 2197, colonne de gauche, alinéa 2 - colonne de droite, alinéa 2 * * page 2198, colonne de droite, alinéa 5 - page 2199, colonne de droite, alinéa 1; figure 2B * * page 2199, colonne de droite, alinéa 3 - page 2200, colonne de droite, alinéa 1 * * page 2200, colonne de droite, alinéa 7 - page 2203, colonne de droite, alinéa 3; figures 5A,6B7A * * page 2204, colonne de gauche, alinéa 3 - colonne de droite, alinéa 3; tableau II * | 1-11 | DOMAINES TECHNIQUES RECHERCHES (Int.Cl.7) |

-/--

Le présent rapport a été établi pour toutes les revendications

| Lieu de la recherche | Date d'achèvement de la recherche | Examinateur |
|---|---|---|
| LA HAYE | 29 janvier 2001 | Roldán Andrade, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.....................................................................................
& : membre de la même famille, document correspondant

EPO FORM 1503 03.82 (P04C02)

**Office européen des brevets**

## RAPPORT DE RECHERCHE EUROPEENNE

Numéro de la demande

EP 00 40 2965

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 637 148 A (NORTHERN TELECOM LTD) 1 février 1995 (1995-02-01) * colonne 1, ligne 50 - colonne 2, ligne 5 * * colonne 2, ligne 17 - colonne 3, ligne 27; figure 1 * --- | 1,3,6,8, 11 | |
| A | LU C -L ET AL: "CORD-A WDM OPTICAL NETWORK: DESIGN AND EXPERIMENT OF FAST DATA SYNCHRONIZATION BY PILOT-TONE TRANSPORT" IEEE PHOTONICS TECHNOLOGY LETTERS,US,IEEE INC. NEW YORK, vol. 8, no. 8, 1 août 1996 (1996-08-01), pages 1070-1072, XP000621657 ISSN: 1041-1135 * page 1070, colonne de droite, alinéa 2 * * page 1071, colonne de gauche, alinéa 2 * ----- | 1,3,6,8 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 29 janvier 2001 | Roldán Andrade, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 2965

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-01-2001

| Document brevet cité au rapport de recherche | Date de publication | Membre(s) de la famille de brevet(s) | Date de publication |
|---|---|---|---|
| DE 19534157 C | 23-01-1997 | AUCUN | |
| EP 0637148 A | 01-02-1995 | GB 2280561 A | 01-02-1995 |
| | | DE 69423152 D | 06-04-2000 |
| | | DE 69423152 T | 06-07-2000 |
| | | US 5463487 A | 31-10-1995 |

EPO FORM P0460

Pour tout renseignement concernant cette annexe : voir Journal Officiel de l'Office européen des brevets, No.12/82